# EUROPEAN PATENT SPECIFICATION

(11) **EP 4 241 418 B1**
(45) Date of publication and mention of the grant of the patent: **18.12.2024**
(21) Application number: 21802668.0
(22) Date of filing: 29.10.2021
(51) Int. Cl.: H04L 9/32

(54) **MANUFACTURER CLONEABLE PHYSICAL UNCLONEABLE FUNCTIONS**
HERSTELLER-KLONIERBARE PUFS
PUFS CLONABLES PAR LE FABRICANT

(30) Priority: 03.11.2020 GB 202017392
(43) Date of publication of application: 13.09.2023
(73) Proprietor: British Telecommunications public limited company, London E1 8EE (GB)
(72) Inventor: WHITE, Catherine, London EC4V 5BT (GB); CATER, Samuel, London EC4V 5BT (GB)
(74) Representative: British Telecommunications public limited company Intellectual Property Department
(86) International application number: PCT/EP2021/080185
(87) International publication number: WO 2022/096403

(56) References cited:
- WO-A1-2017/177105
- US-A1- 2008 237 506
- US-B2- 10 547 460
- TAKASHI SATO ET AL: "Clonable PUF: On the Design of PUFs That Share Equivalent Responses", vol. 20210317:153652, 15 March 2021 (2021-03-15), pages 1 - 5, XP061052481, Retrieved from the Internet <URL:https://eprint.iacr.org/2021/341.pdf> [retrieved on 20210315]

## Description

### Technical Field

The present invention relates to physical unclonable functions.

### Background

A physical unclonable function (PUF) is a physical object with unique features that arise naturally or are manufactured. Due to the particular features of a given PUF, the PUF provides a unique output (which may be referred to as a response) for a given input (which may be referred to as a challenge). In general, a PUF is unclonable and unique, and exhibits behaviour that is unpredictable but is nevertheless reproducible by that PUF itself. In other words, the same challenge given to different PUFs should generate a different response, but repeated performance of the same challenge using the same PUF should generate the same response. Due to the unique nature of a PUF, it should generally be technologically impossible or at least highly infeasible for a malicious party to produce an exact copy of a PUF, even if the malicious party knows the design and manufacturing processes used to produce the PUF.

These properties of PUFs make them well-suited for authentication. An authenticating party can submit a challenge to a PUF (e.g. associated with a device to be authenticated), for which a table of challenge-response pairs has been previously generated. If the authenticating party receives the correct response for the challenge they submitted, the authentication succeeds. However, a malicious party may gain unauthorised access to the challenge submitted by the authenticating party. In this case, the malicious party can easily obtain the correct response to the challenge if they also have access to the table of challenge-response pairs or if they are able to simulate the table, for example if the malicious party previously had access to the PUF and was able to create a simulation of the PUF, e.g. using machine learning techniques to learn the response to a given stimulus. The malicious party can then successfully complete the authentication, despite not having access to the PUF. Known systems using PUFs for authentication can therefore be susceptible to unauthorised access by a malicious party.

To improve security, it is known to use so-called quantum readout. With quantum readout, the challenge is a quantum state, and the response is the measurement of the quantum state after physical interaction with a PUF, for example reflection or transmission of the quantum state through the PUF. A quantum state contains more information than can be determined by a single measurement by an eavesdropper who does not know how the state has been prepared. This makes it difficult for a malicious party to correctly determine the challenge submitted by the authenticating party and hence to obtain the correct response to the challenge. However, quantum readout relies on a physical path between the authenticating party and the device to be authenticated. This can be difficult or impossible to arrange, reducing the utility of the quantum readout approach.

It is desirable to at least alleviate some of the aforementioned problems.

US 2008/237506 A1, WO 2017/177105 A1, and US 10 547 460 B2 all disclose background art.

### Summary

Aspects of the present disclosure are set out in the appended claims.

The disclosure also extends to methods and/or apparatus substantially as herein described and/or as illustrated with reference to the accompanying drawings. Any apparatus feature may also be provided as a corresponding step of a method, and vice versa.

As used throughout, the word 'or' can be interpreted in the exclusive and/or inclusive sense, unless otherwise specified.

### Brief Description of the Drawings

For a better understanding of the present disclosure, reference will now be made by way of example only to the accompany drawings, in which:
Figure 1 is a flow diagram of an example method of manufacturing a plurality of physical unclonable functions (PUFs);
Figures 2a to 2c are schematic diagrams illustrating the manufacture of a plurality of PUFs according to an example;
Figures 3a and 3b are schematic diagrams illustrating the manufacture of a plurality of PUFs according to a further example;
Figure 4 is a schematic diagram illustrating the manufacture of a plurality of PUFs according to a yet further example;
Figure 5 is a flow diagram of an example method of forming an object for use in the manufacture of a plurality of PUFs;
Figure 6 is a schematic diagram of a system in which a plurality of PUFs are used for authentication;
Figure 7 is a flow diagram of an example authentication method using a plurality of PUFs;
Figure 8 is a schematic diagram of a system for obtaining a response to a challenge using a PUF according to an example;
Figure 9 is a schematic diagram of a system for obtaining a response to a challenge using a PUF according to a further example;
Figure 10 is a schematic diagram showing internal components of a network element comprising a PUF according to an example; and
Figure 11 is a schematic diagram of a system for obtaining a response to a challenge using a PUF according to a further example.

### Detailed Description

Apparatus and methods in accordance with the present disclosure are described herein with reference to particular examples. The invention is not, however, limited to such examples.

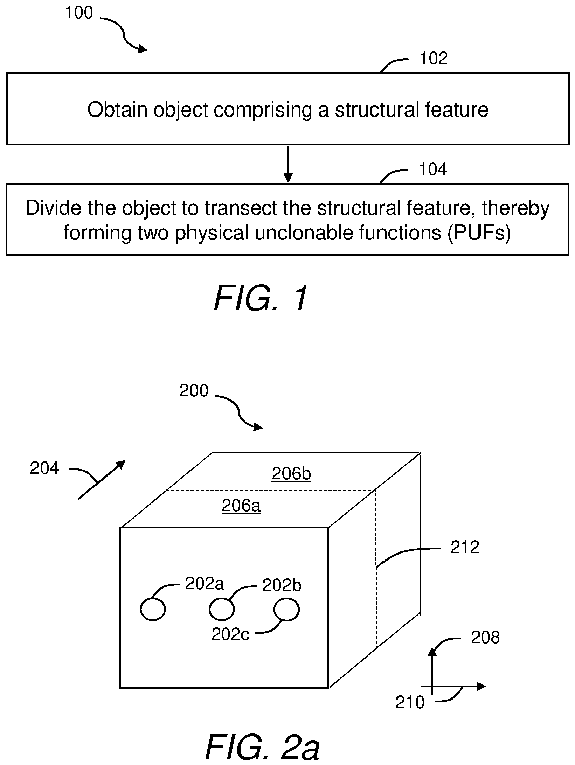

Figure 1 is a flow diagram of an example method 100 of manufacturing a plurality of physical unclonable functions (PUFs), which are sometimes referred to as physically unclonable functions. The method 100 of Figure 1 can be used to create multiple identical (or practically identical) versions of a physical component. In this way, twin, triplet or n-plet (i.e. n) versions of the physical component can be created, each of which has the same unique features as each other. Each of the versions can be used as a respective PUF. Each of the PUFs may be associated with a different respective device, and used for authentication. As each of the devices is associated with its own PUF, the devices can successfully authenticate one another even when they are remote from each other and are not connected via a quantum or physical channel. The approaches herein may hence be used in situations that are unsuitable for existing quantum readout approaches, e.g. where a physical channel between devices is lacking.

Furthermore, the approaches herein are more secure than existing PUF authentication approaches that do not rely on quantum readout. In particular, the existing non-quantum approaches rely on the authenticating party having access to the expected responses of a PUF to a limited number of challenges (e.g. as stored in a challenge-response table). However, the methods herein allow a plurality of corresponding PUFs to be created and provided to different parties. Each party can then reproduce the response to a given challenge locally, which can be compared to the response received from a remote party during authentication. This removes the need for a challenge-response table to be created for a given PUF. In addition, the methods herein can be used to obtain PUFs with a pattern that is too intricate or complex to be feasibly digitised and stored as a challenge-response table. The number of possible challenges that can be submitted to such a PUF can be extremely large, reducing the likelihood of sending the same challenge to a given PUF. This further improves security.

At item 102 of Figure 1, an object comprising a structural feature is obtained. A structural feature is for example a characteristic of the structure of the object, e.g. due to the arrangement of and relations between the components of the object, at a microscopic or macroscopic level. A structural feature may be naturally occurring or may have been created during manufacture of the object. In some cases, the structural feature includes at least one linear feature which extends along a first axis is obtained. A linear feature is for example a characteristic that follows a straight line or an approximately straight line along the first axis or along an axis parallel to the first axis, as discussed further below.

At item 104 of Figure 1, the object is divided to transect the structural feature, thereby forming two PUFs, each comprising a respective portion of the structural feature. In this example, the structural feature traverses or otherwise crosses a surface along which the object is divided, which may be referred to as a plane of cleavage or a cut-plane, so that the structural feature is present in both of the PUFs created from the object. However, it is to be appreciated that, in some cases, the surface along which the object is divided may be non-planar. The structural feature may be or include a boundary between crystalline domains of the object, which may be referred to as a grain boundary. This grain boundary may be exactly or approximately planar, or it may be more irregular. However, at the surfaces of each of the PUFs which are exposed by dividing the object (which may be referred to as the exposed surfaces of each of the PUFs), there is typically a similarity (which may not be exact) between the profile of the structural feature on each of the exposed surfaces of the PUFs. In other words, a surface pattern of one of the PUFs may be considered to correspond to a surface pattern of the second PUF. The surface pattern of the PUFs in this case is for example a pattern on the exposed surface of the respective PUF that arises due to the structural feature, e.g. due to a grain boundary. In some cases, the structural feature is also similar or substantially the same within a given depth of each of the PUFs (taken from the exposed surface into the respective PUF, e.g. in a direction substantially parallel to the exposed surface). This allows a comparable response to a given challenge to be obtained using each of the PUFs, e.g. facilitating use of the PUFs for authentication. For example, where the object includes a crystalline material, the structural feature may be similar within a plurality of crystalline planes of the exposed surface so that the structural feature (e.g. a grain boundary) may be imaged, or otherwise interacted with, from each exposed surface, to obtain comparable results from each of the PUFs.

In examples in which the structural feature includes at least one linear feature, the object may be divided along at least one further axis substantially perpendicular to the first axis, into a plurality of slices. Each of the plurality of slices corresponds to a respective PUF, and includes a respective portion of the at least one linear feature. Due to the linear nature of the at least one linear feature, the linear feature is present in planes perpendicular to the first axis, including in a plane defined by the at least one further axis. Dividing the object therefore involves slicing through the at least one linear feature, to reveal slices which each have the same pattern (each corresponding to a respective portion of the at least one linear feature). In this way, a plurality of identical or corresponding PUFs can be manufactured, which each have the same or a similar linear feature in the same location. For example, each slice may be the same width as each other. In other cases, the plurality of PUFs may each be the same width as each other, but there may be at least one remaining portion of the object that remains after the formation of the plurality of PUFs. The at least one remaining portion of the object may be different from the PUFs, e.g. with a different width and/or with a different feature. For example, the at least one linear feature may extend only partway through the object. In such cases, the PUFs are formed from the part of the object that includes the at least one linear feature. A further part of the object that remains after the PUFs have been created may be used for another purpose or discarded. In other cases, the width of each of the slices need not be the same, e.g. if the challenge is based on interaction with an exposed surface of a PUF. However, if the challenge is based on internal interaction with a PUF with at least one linear feature (e.g. based on transmission of radiation through the PUF), the width of each of the PUFs created from a particular object is constrained by the scale over which the at least one linear feature is approximately linear, divided by the number of PUFs to be created, so that each PUF is sufficiently similar to each other.

Although this method 100 can be used to create multiple identical PUFs, it is to be appreciated that the PUFs are not clones of each other: each of the plurality of PUFs is a different slice of the object. However, by dividing the object to transect the structural feature, e.g. perpendicular to at least one linear feature, each of the plurality of PUFs has the same unique feature (which is unique to the object from which each of the PUFs was manufactured). For example, each of the PUFs may have the same surface pattern or the same internal structure as each other. Each of the PUFs individually has the properties of a PUF, and hence is infeasible to copy or otherwise clone. Hence, once the plurality of PUFs are manufactured, it is generally infeasible or impossible to create further identical PUFs (unless there is a portion of the object remaining, from which further slices can be taken). In particular, it is generally infeasible or impossible to create additional identical PUFs using a different object than the original object from which the plurality of PUFs are manufactured. This is due to the unique structure of the original object, which is difficult to accurately reproduce.

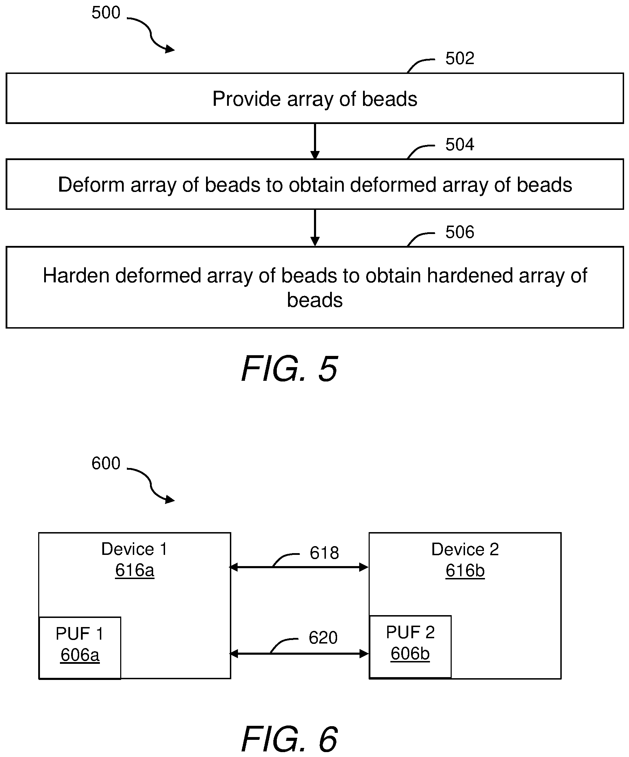

The PUFs created using the method 100 of Figure 1 may be identical to the extent that each of the PUFs would produce the same response to a given challenge. This simplifies the use of the PUFs for authentication, as discussed further with reference to Figures 6 to 9. In other cases, the PUFs may be substantially identical to each other, e.g. so that each of the PUFs would produce the same response to a given challenge within a particular statistical bound (e.g. within the bounds of expected measurement errors). In such cases, the responses produced by each of the PUFs may be significantly more similar than responses obtainable by other PUFs (even those manufactured using the same design as and manufacturing process as that used to generate the original object).

The degree of similarity between the PUFs depends on various different factors, such as the width of each slice, the degree of deviation of the structural feature with respect to the exposed surfaces of each of the PUFs created, the angle(s) at which the object is divided (e.g. whether at least one further axis along which the object is divided is exactly perpendicular to a first axis along which at least one linear feature of the object extends, or is substantially perpendicular to the first axis, such as perpendicular to the first axis within measurement or manufacturing tolerances), and so forth. For example, at least one linear feature of the object may not follow a perfectly straight line, but any deviations from a straight line may be sufficiently small that each of the slices is substantially identical to each other, so that each of the PUFs is substantially identical to each other.

In yet further cases, each of the PUFs differs to some extent with respect to each other. Nevertheless, the PUFs may be sufficiently similar to each other that differences between each of the PUFs can be compensated for, so as to obtain the same response or substantially the same response to a given challenge using each of the PUFs (e.g. by applying an appropriate transfer function or other compensation to least one of the responses). In such cases, the differences between the PUFs are typically notably smaller than the differences between PUFs obtained using different respective objects, which are generally too significant to be compensated for in this manner. Furthermore, the responses obtained using each of the PUFs are generally noticeably different from a response that would obtained from an attempted recreation of one of the PUFs (e.g. by attempting to newly manufacture one of the PUFs from a different object of the same material as the original object or by attempting to digitally reproduce one of the PUFs, e.g. based on measurements from previous challenges supplied to the PUF).

Various different materials may be used to manufacture a plurality of PUFs in accordance with the method 100 of Figure 1. Figures 2a to 2c are schematic diagrams illustrating the manufacture of a plurality of PUFs according to an example. The dimensions of Figures 2a to 2c are exaggerated to more clearly illustrate the principles described. However, it is to be appreciated that, in practice, each of the PUFs manufactured using the methods herein will typically be far thinner than those shown in Figures 2a to 2c.

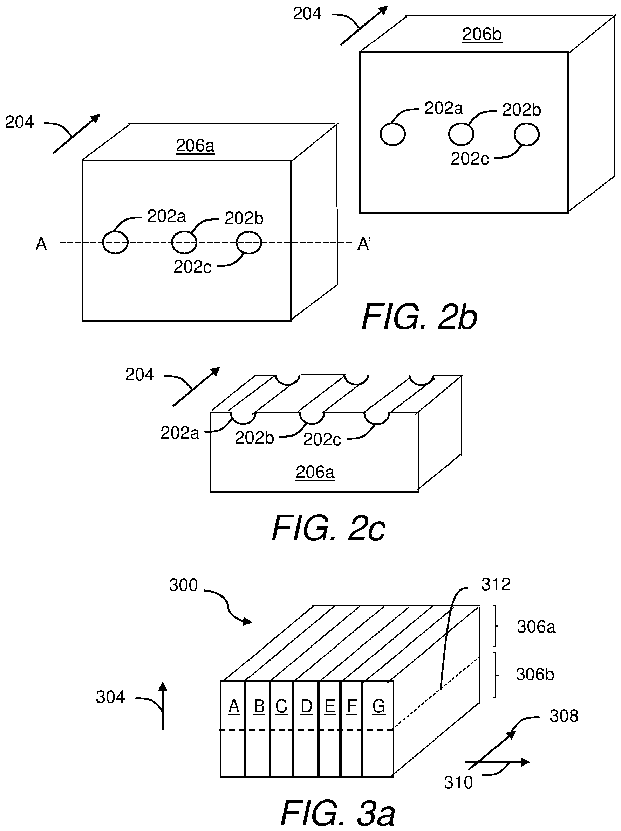

Figure 2a shows an object 200 from which a plurality of PUFs is formed. In this case, the object 200 is a slab of dielectric material, e.g. glass, plastic (which may be transparent), a crystalline dielectric material, or may include or be formed from silicon. The object 200 includes a plurality of holes 202a-202c (collectively referred to with the reference numeral 202). An object such as the object 200 of Figure 2 can be manufactured by providing material for forming the object 200 and then creating at least one hole in the material, e.g. by drilling the at least one hole in the material. In other cases, though, an object may include holes that arise naturally, e.g. due to the intrinsic structure of the material of the object.

In Figure 2a, the holes have been drilled into the slab of dielectric material with a periodicity of an order similar to the wavelength of electromagnetic (EM) radiation intended to be used for interrogating the PUFs produced from the object 200, e.g. during use of the PUFs for authentication as discussed in detail with reference to Figures 6 to 9. For example, the holes may have a periodicity of in the range of 100 nanometres (nm) to 400nm, 400nm to 700nm, or 700nm to 10,000nm, so as to produce an interference pattern when the PUFs are illuminated with ultraviolet, visible, or infrared light respectively (all of which are typically safer and cheaper to use than other EM radiation, such as X-rays).

In Figure 2a, the holes 202 extend along a first axis 204. The object 200 is divided into two slices 206a, 206b (although other objects may be divided into more slices in other examples) along further axes 208, 210 that are perpendicular to the first axis 204. In Figure 2a, the first axis 204 is illustrated as extending into the page, and the further axes 208, 210 are illustrated as extending in the vertical and horizontal directions, respectively. The further axes 208, 210 in this example define a plane 212 that is perpendicular to the first axis 204, which is indicated with a dashed line in Figure 2a. The plane 212 corresponds to a cleavage plane, along which the object 200 is divided into slices 206a, 206b.

Figure 2b shows the two slices 206a, 206b after they have been formed by dividing the object 200 of Figure 2a into two. Each slice corresponds to a respective PUF, which in this case are identical PUFs. As can be seen from Figure 2b, each slice 206a, 206b includes a respective portion of each of the holes 202. The holes 202 in this case are unique features that allow the slices 206a, 206b to be used as PUFs. Each hole will typically include small defects or other characteristics, e.g. due to intrinsic properties of the material of the object or due to the interaction between the drill and the material as the holes 202 were formed. Such characteristics are typically difficult to replicate, making the PUFs difficult to clone. However, the scale of these characteristics is for example larger than the width of each of the slices 206a, 206b, so that the characteristics for each of the slices 206a, 206b are the same or substantially the same as each other.

Holes can be provided in the object 200 in a straightforward and controllable manner, simplifying manufacture of a suitable object 200 with at least one linear feature. Furthermore, as the direction of the holes can be controlled during manufacture of the object 200 (in examples where the holes are created rather than being intrinsic to the material of the object), the direction of the first axis 204 is set by the direction along which the holes are created. This simplifies the determination of the appropriate further axes along which the object 200 is to be divided, as this can simply be taken as axes that are perpendicular to the direction along which the holes are created, e.g. corresponding to a plane intersecting the direction in which the holes are formed.

Figure 2c shows the first slice 206a along the line A to A' shown in Figure 2b, to more clearly show the extension of the holes 202 along the first axis 204. In Figures 2a to 2c, the holes 202 pass through the object 200 (and hence through each of the slices 206a, 206b) from one side (the front side in Figure 2c) to an opposite side. In other cases, though, at least one hole need not pass all the way through an object or an object may comprise more or fewer holes.

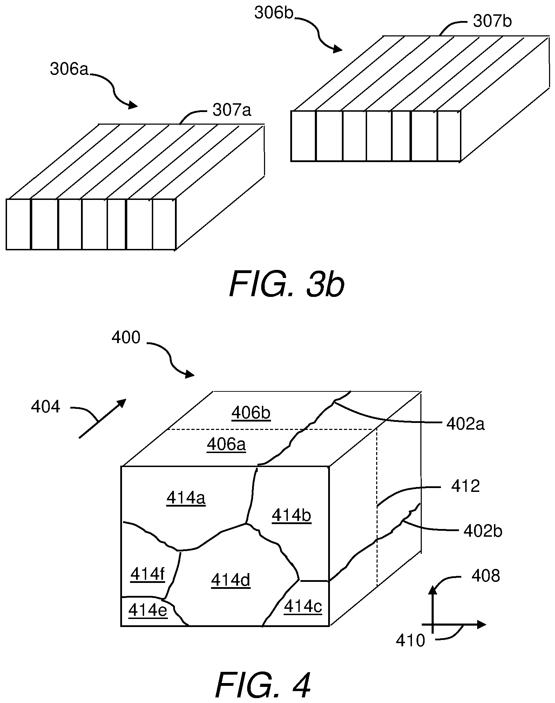

Figures 3a and 3b are schematic diagrams illustrating the manufacture of a plurality of PUFs according to a further example. Similarly to Figures 2a to 2c, the dimensions of Figures 3a and 3b are exaggerated for clarity. Features of Figures 3a and 3b that are similar to corresponding features of Figures 2a to 2c are labelled with the same reference numerals incremented by 100; corresponding descriptions are to be taken to apply.

Figure 3a shows an object 300 from which a plurality of PUFs is formed, according to a further example. In Figure 3a, the object 300 comprises a stack of layers of material, such as a dielectric material e.g. a glass or a crystal such as silicon dioxide or calcium phosphide. The layers are labelled in Figure 3a from A to G. At least one of the layers may be of a different material and/or have at least one different property than at least one other layer, such as a different thickness and/or a different dielectric constant. In Figure 3a, each of the layers is of a different material. In other examples, though, each of the layers is of the same material, but deposited in a layered fashion (e.g. by depositing one layer, than subsequently depositing another layer, and so on), so as to form distinct layers. In the example of Figure 3a, the first layer (layer A) has a first dielectric constant, and the second layer (layer B) has a second dielectric constant different from the first dielectric constant, but this is merely an example. The different dielectric constants create a greater distinction between the layers, providing a more distinctive feature in the PUFs manufactured from the object 300. The variation in properties of each of the layers, such as material, thickness and/or dielectric constant, can be used to create a unique object that is suitable for forming unique PUFs. Although in Figure 3a, the object 300 includes 7 layers, it is to be appreciated that this is merely an example and, in practice, an object that is otherwise similar to the object 300 of Figure 3a may include fewer or more layers, such as 20 layers or 200 or more layers.

The interfaces between neighbouring layers of the stack, along which the neighbouring layers are in contact with each other, extend along a first axis 304. In this case, the object 300 includes a plurality of linear features, each of which corresponds to a respective interface between adjacent layers of the stack. The first axis 304 is illustrated as extending in vertically in Figure 3a. The object 300 is divided into two slices 306a, 306b along further axes 308, 310 perpendicular to the first axis 304, which in this case correspond to a plane perpendicular to the first axis 304. In Figure 3a, the further axes 308, 310 are illustrated as extending into the page and horizontally. The slices 306a, 306b are shown in Figure 3b after they have been separated from one another. Each of the slices 306a, 306b corresponds to a respective PUF. As can be seen from Figure 3b, each of the slices 306a, 306b has the same pattern of layers as each other. Each of the slices 306a, 306b has an exposed surface 307a, 307b, which is exposed by dividing the object 300 into the slices 306a, 306b. Due to the structural feature of the object 300 (in this case, the pattern of layers of the object 300), the exposed surface 307a of a first slice 306a corresponds to the exposed surface 307b of a second slice 306b. In this case, the exposed surfaces 307a, 307b are substantially identical to each other (e.g. identical to each other subject to manufacturing defects or features that may have been created during the separation of the first slice 306a from the second slice 306b).

Use of an object comprising a stack of layers, such as the object 300 of Figures 3a and 3b, for forming a plurality of PUFs simplifies the formation of the PUFs. Various different manufacturing techniques can be used to deposit a series of layers each with a substantially planar surface (e.g. planar within manufacturing tolerances). The planar nature of the surfaces of the layers in turn allows a planar interface between neighbouring layers to be formed straightforwardly, providing a series of unique features extending along the same axis (i.e. the interfaces between the layers extending along the first axis 304). These interfaces are eminently suitable for use in forming a plurality of PUFs with identical or substantially identical features. Furthermore, as for the example of Figures 2a to 2c, the determination of the further axes is also simplified, as the further axes merely correspond to axes perpendicular to a plane parallel to the respective surface planes of each layer (which are e.g. parallel to a surface of a substrate on which the layers are deposited).

Figure 4 is a schematic diagram illustrating the manufacture of a plurality of PUFs according to a yet further example. Similarly to Figures 2a to 2c, the dimensions of Figures 3a and 3b are exaggerated for clarity. Features of Figure 4 that are similar to corresponding features of Figures 2a to 2c are labelled with the same reference numerals incremented by 200; corresponding descriptions are to be taken to apply.

Figure 4 shows an object 400 from which a plurality of PUFs is formed, according to a further example. In Figure 4, the object 400 comprises a crystalline material, which is for example a solid material with constituents arranged in a periodic crystal structure, e.g. corresponding to a crystal lattice. Crystalline material may include defects that are suitable as the structural feature, such as linear defects (which may be referred to as dislocations). Linear defects of crystalline material include edge dislocations, which can be visualised as an extra half-plane of atoms in a crystal lattice that lie along a line along the top of the extra half-plane of atoms, and screw dislocations, which also typically create a linear defect within a crystal.

The structural feature may instead or in addition include an interface between at least two crystalline domains of the crystalline material, which may be referred to as a grain boundary. If a grain boundary is aligned along a first axis substantially perpendicular to the plane of cleavage (along which the object is divided into respective slices), then the grain boundary will be similar or substantially identical in adjacent slices. In some cases, a grain boundary may not extend along the first axis for the entire width of the object. Nevertheless, if the object is divided into sufficiently thin slices, the grain boundaries may be sufficiently similar in each of the slices to obtain substantially identical slices. In other cases, the exposed surfaces of the slices may have a similar or identical surface pattern, due to the object being divided so as to transect the grain boundary. In these cases, each of the slices may have a different internal structure from each other away from the exposed surface.

Figure 4 shows an example of an object 400 comprising a plurality of crystalline domains. In this case, the object 400 includes six crystalline domains 414a-414f, with interfaces between neighbouring crystalline domains. In the object 400 of Figure 4, each of the interfaces extend along the same axis (a first axis 404). Figure 4 illustrates schematically the interface between a first and a second crystalline domain 414a, 414b, which corresponds to a first linear feature 402a extending along the first axis 404. Figure 4 also shows the interface between the second and a third crystalline domain 414b, 414c, which corresponds to a second linear feature 402b extending along the first axis 404. The object 400 of Figure 4 also includes additional structural features (which may be linear features) within the interior of the object 400 that are not visible in Figure 4. The object 400 of Figure 4 can be divided into two slices 406a, 406b along further axes 408, 410 perpendicular to the first axis 404 so as to create two PUFs, each corresponding to a respective slice 406a, 406b of the object 400.

EM radiation incident on crystalline material is scattered according to Bragg's law. When crystalline material is illuminated with a coherent source of EM radiation (such as X-rays, e.g. from a synchrotron), successive planes of atoms of the crystal lattice reflect the incident radiation. This creates an interference pattern (sometimes referred to as a speckle pattern), which is characteristic of the arrangement of features (e.g. defects) of the particular piece of crystalline material illuminated, and the angle of illumination by the EM radiation. When a multicrystalline material (e.g. comprising a plurality of crystalline domains) is illuminated with sufficiently intense EM radiation to cause reflection from a plurality of the crystalline domains, the interference pattern will be even more complex, and will also depend on the illumination angle. These properties allow an interference pattern generated using a PUF to be used in authentication, as discussed further below with reference to Figures 6 to 9.

Bragg reflection from naturally occurring crystalline materials occurs with EM radiation in the X-ray portion of the EM spectrum. However, X-rays can be expensive to generate and are potentially dangerous for humans, as they are highly ionising. Hence, in some cases, objects according to the examples herein include crystalline materials for which an interference pattern can be generated using cheaper and/or safer EM radiation sources, which for example generate EM radiation in the infrared, visible or ultraviolet regions of the EM spectrum. Such crystalline materials include photonic-crystalline materials. Photonic-crystalline materials (which may be referred to as photonic crystals) typically have a periodic optical nanostructure. Photonic crystals can have similar structures and/or symmetries as naturally-occurring atomic crystals, but generally have larger, nanostructure features and periodicities. Nevertheless, photonic crystals can include similar features or defects as atomic crystals, such as dislocations and/or grain boundaries between adjacent crystalline domains.

Objects in accordance with the examples herein may include various different structures and/or materials to increase the complexity of an interference pattern producible by a slice of the object (e.g. corresponding to a respective PUF). Increasing the complexity of the interference pattern increases the uniqueness of the PUF, which can increase the security of a system that uses the PUF for authentication. For example, the object may include a compound of multiple photonic crystals. In such cases, the multiple photonic crystals may be compounded together in a dielectric matrix, e.g. at different respective angles in the matrix to increase complexity. The object may instead or in addition include a birefringent material, which is a material with a refractive index that varies depending on the polarization of incident radiation. In other words, two components of light with different respective polarizations will be refracted differently by the birefringent material, which can make the interference pattern more complex than otherwise. As another example, an object that may be used in the examples herein may include a plurality of particles with a size of tens or hundreds of nanometres, as discussed further with reference to Figure 5.

An object such as that of Figure 4 can be manufactured in various ways, such as by compressing together fragments, e.g. shards, of crystalline material (such as opaline material). By compressing crystal fragments in this way, grain boundaries between crystalline domains at different angles can be obtained that are similar to grain boundaries that occur in natural crystalline materials such as metals, but at a larger scale. In other cases, objects comprising a plurality of crystalline domains can be made by embedding pieces of crystalline material in a suitable medium, such as a glassy matrix.

Figure 5 is a flow diagram of an example method 500 of forming an object for use in the manufacture of a plurality of PUFs. The method 500 of Figure 5 may be considered to use a so-called "reverse opalescence" technique. At item 502 of Figure 5, an array of particles is provided, for example in a suitable container. The particles may be nanoparticles, which are particles with a size (e.g. a diameter) of the order of tens or hundreds of nanometres. It is to be appreciated that the particles may include a cavity or may lack a cavity. For example, particles as described herein may be nanobeads, which include a cavity. Example particles without a cavity include regular (e.g. spherical) nanoparticles, e.g. made of polystyrene. Example particles with a cavity include similar nanoparticles made of polystyrene with the addition of a cavity within, which can be manufactured as described in Nanotechnology 17 (2006) 5717-5721. Various other materials may be used for particles of an array such as that for use in the method 500 of Figure 5, such as polyester.

At item 504 of Figure 5, the array of particles is deformed to obtain a deformed array of particles. By deforming the array, defects, e.g. linear defects, are introduced into the three-dimensional array of particles. In the example in which the array of particles is provided in a container, the container can be deformed to deform the array of particles, e.g. if the container is slightly flexible. In one case, the array of particles is provided in the container, and the container is agitated to cause the particles to settle into a regular crystalline pattern (which may occur naturally under gravity or due to the application of an appropriate electromagnetic force). A hardening matrix is then applied to the array of particles, which is for example in the form of a liquid or gel. Before the hardening matrix sets, the container is deformed, for example by bending, twisting, compressing and/or extending the container. This causes a corresponding deformation of the array of particles within the container. The crystalline planes of particles slip relative to each other, which introduces various defects within the array of particles, such as edge and/or screw dislocations.

At item 506 of Figure 5, the deformed array of particles is hardened to obtain a hardened array of particles, which may be considered to correspond to a crystal. The deformed array of particles may be hardened in any suitable way. For example, the deformed array of particles may harden gradually over time, or may harden in response to the application of an external stimulus such as ultraviolet light. In a variation of this method, the hardening matrix is applied after the deforming stresses to the container are applied.

The hardened array of particles can then be used as, or as part of, the object from which the PUFs are formed. In one example, the reverse opalescence method is used to form first and second deformed arrays of particles. While the first and second deformed arrays of particles are hardening, the first and second deformed arrays are brought into contact with each other so as to form an object comprising a first hardened array of particles (formed by hardening the first deformed array of particles) and a second hardened array of particles (formed by hardening the second deformed array of particles). In this way, an object can be formed by pressing together multiple crystals formed using the reverse opalescence method before the hardening matrix has set (e.g. by placing both crystals in the hardening matrix while it is soft, and bringing them together). The crystals that are brought together flow by plane slippage in order to form crystalline domains (each corresponding to a respective crystal) which tessellate to form a three-dimensional object. An object formed in this way can subsequently be divided into PUFs (once the hardening matrix has set), in accordance with the methods described herein with reference to Figures 1 to 4.

PUFs formed using the methods of Figures 1 to 5 may be incorporated in various different devices or apparatus, e.g. for authentication. For example, a PUF can be included in a network element. A network element is for example a device that is connectable to a telecommunications network. A network element may be a device that provides an entry point to a telecommunications network or that filters and/or routes network traffic, such as a router, gateway device, switch, hub, access point or an edge device (which may be or comprise a router or routing switch). The PUF can be used to authenticate the network element. Authentication using a PUF will now be discussed with reference to Figures 6 to 9.

Figure 6 is a schematic diagram of a system 600 in which a plurality of PUFs 606a, 606b are used for authentication. A first PUF 606a is associated with a first device 616a and a second PUF 606b is associated with a second device 616b. A surface pattern of the first PUF 606a corresponds to a surface pattern of the second PUF 606b. For example, the surface patterns of the first and second PUFs 606a, 606b may be sufficiently similar to identify that the first and second PUFs 606a, 606b have been obtained from the same object, based on a response to a given challenge obtained using each of the PUFs 606a, 606b. In this example, each of the devices 616a, 616b is a respective network element, however it is to be appreciated that other devices than network elements may comprise a PUF for authentication. The PUFs 606a, 606b have been manufactured from the same object, for example using any of the methods described in accordance with Figures 1 to 5, and in this example are substantially identical.

The first device 616a is remote from the second device 616b in Figure 6. In other words, the first device 616a and the second device 616b are in different physical locations that are separated from each other, e.g. in different buildings. For example, the second device 616b may not be visible to a human observer located at the first device 616a. The system 600 includes an authentication channel 618 for the exchange of messages for authentication and a data channel 620 for the exchange of data, e.g. after the authentication process has been successfully completed. The authentication channel 618 and the data channel 620 may be wired or wireless channels, to allow data to be communicated directly between the devices 616a, 616b or via a suitable network, such as the Internet. Unlike existing quantum readout authentication techniques, the authentication channel 618 need not include an uninterrupted physical path between the devices 616a, 616b. This allows the system 600 to be used for authentication in situations in which such a physical path is impossible or difficult to arrange. Although not shown in Figure 6, in other examples, a similar system may additionally include a quantum channel for exchanging messages for quantum key distribution (QKD).

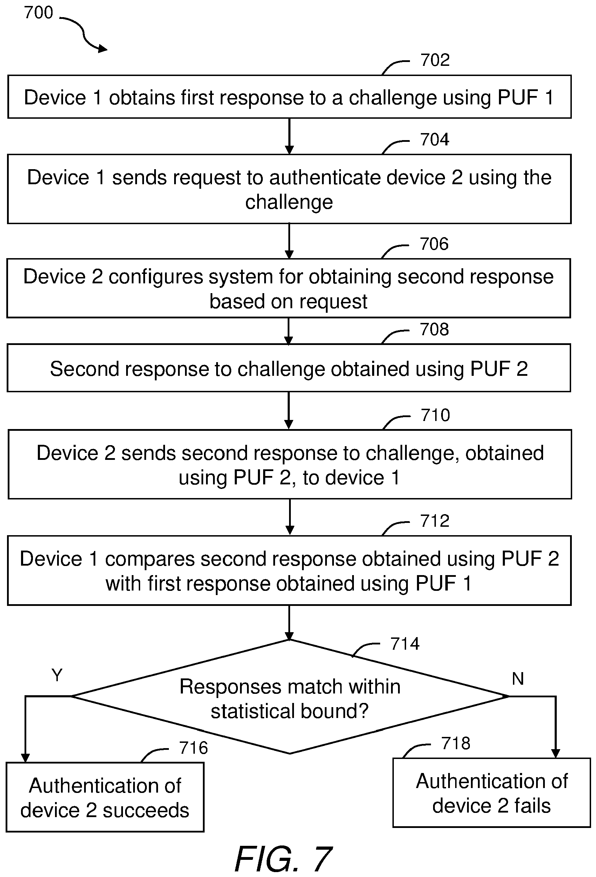

Figure 7 is a flow diagram of an example authentication method 700 using a plurality of PUFs (in this case, two PUFs), which have been manufactured from the same object (e.g. using the methods of any of Figures 1 to 5). The method 700 of Figure 7 may be implemented using a system such as the system 600 of Figure 6, in which a first device 616a is associated with a first PUF 606a, and a second device 616b is associated with a second PUF 606b.

At item 702 of Figure 7, the first device (referred to in Figure 7 as "device 1") obtains a response to a challenge using a first PUF (referred to in Figure 7 as "PUF 1"). A challenge in the context of authentication using PUFs for example refers to a particular physical interrogation of the PUF, such as illumination of the PUF using EM radiation with a particular wavelength generated by a radiation source at a particular position relative to the PUF. Interrogating the PUF in this way produces a unique and highly complex response, such as a particular interference pattern which is specific to the challenge and to the PUF. For example, a challenge in this context may be considered to refer to a particular input and conditions that can provide a reproducible and measurable response, so that the same challenge applied to the same PUF should produce the same response each time. The selection of the challenge to be used may be performed by the first device (or another device) at random, to increase the unpredictability of the authentication process. Obtaining the response to the challenge using the first PUF may involve appropriately configuring a system for obtaining the response so that the first PUF is interrogated with the particular input and conditions that correspond to the challenge.

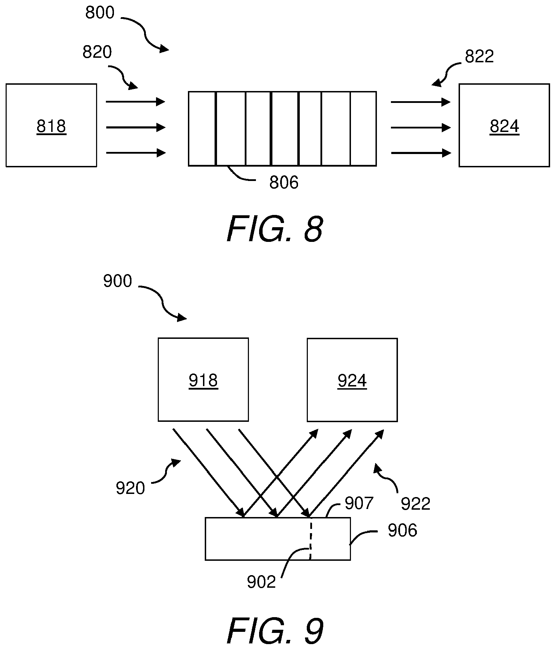

To illustrate how a response to a challenge may be obtained at item 702 of Figure 7, Figure 8 will now be described. Figure 8 is a schematic diagram of an example system 800 for obtaining a response to a challenge using a PUF. The system 800 of Figure 8 includes a PUF 806 (which is e.g. the first PUF, where the system 800 of Figure 8 is used to implement item 702 of Figure 7). The PUF 806 is similar to one of the PUFs 306a, 306b of Figures 3a-3c and includes a stack of layers. The PUF 806 is shown in plan view in Figure 8

The system 800 includes a radiation source 818, which in this example is a coherent laser light source. The radiation source 818 is arranged to illuminate the PUF 806 with EM radiation 820, for example in the ultraviolet, visible and/or infrared regions of the EM spectrum. The EM radiation 820 generated by the radiation source 818 is incident on the PUF 806 and, in this example, is at least partially transmitted through the PUF 806. The transmitted EM radiation 822 is detected by a radiation detector 824. Transmission of the EM radiation through the PUF 806 generates an interference pattern, due to scattering of the EM radiation by the PUF 806. The layers of the PUF 806 create a distinctive interference pattern which is indicative of that particular PUF 806 (which includes that particular stack of layers). The radiation detector 824 detects at least a portion of the interference pattern, which in turn is used to generate a response to the challenge. The radiation detector 824 is capable of detecting at least one characteristic of the radiation incident thereon, such as an intensity and/or a frequency of the incident radiation. In some cases, the radiation detector 824 is arranged to sense the frequency of the incident radiation, as the interference pattern may include fringe features of varying wavelengths (and hence varying colours if the radiation is in the visible spectrum), as a result of both birefringence and interference.

The response to the challenge need not be the entirety of the interference pattern detected by the radiation detector 824. For example, the challenge may indicate the extent of the interference pattern to be used for generating the response. In some cases, the response is obtained using a first portion of the interference pattern, without using a second portion of the interference pattern. For example, the first portion of the interference pattern may be measured using a first set of elements of an array of detector elements of the radiation detector 824, without using measurements obtained using a second, different, set of elements of the array. This increases the complexity of the challenge.

As noted above, the challenge for example corresponds to a particular input and conditions. Hence, in order to obtain the response to a particular challenge, at least one element of the system 800 may be configured in accordance with the challenge. For example, the radiation source 818 and/or the radiation detector 824 may be configured in a particular configuration in accordance with the challenge. The particular configuration may include a particular positioning of the radiation source 818 and/or the radiation detector 824 relative to each other and/or to the PUF 806 itself. A particular positioning for example refers to a physical location of respective components of the system 800, which may be expressed as a distance between respective components of the system 800. The positioning may indicate an angular position of respective components, in absolute or relative terms, e.g. an angle of rotation of the PUF 806, and hence the interfaces between neighbouring layers (which e.g. corresponds to a linear feature of the PUF 806), with respect to the radiation source 818 and/or the radiation detector 824.

To facilitate the accurate positioning of the elements of the system 800 relative to each other in accordance with a particular challenge, at least one of the radiation source 818, the PUF 806 or the radiation detector 824 may be moveable e.g. by a suitable actuator. For example, at least one of these components may be mounted onto a moveable (e.g. rotatable) platform, which can be precision driven, for example by a stepper motor. In one case, the PUF 806 is mounted on a rotatable platform and the radiation source 818 and the radiation detector 824 are attached to a non-rotating portion of the platform so that the PUF 806 can be rotated on the platform without changing the position of the radiation source 818 or the radiation detector 824. In this example, the PUF 806 is moveable in one plane. However, in other cases, at least one component of the system 800 may be moveable in more than one plane. This allows a wider variety of challenges to be used.

In other cases, the particular configuration indicated by the challenge may include a particular feature of EM radiation to be generated by the radiation source 818, such as the wavelength and/or bandwidth of the EM radiation. In some cases, the challenge indicates both a particular feature of the EM radiation and a particular positioning of respective elements of the system 800. Additionally or alternatively, the particular configuration may include a particular electromagnetic field to be applied to the PUF 806 and/or a particular voltage to be applied to the PUF 806. For example, an electric field generator and/or a voltage generator may be connected to the PUF 806. Such generator(s) may be connected to the PUF 806 using a suitable probe or electrical contact point or the generator(s) may be interleaved within the PUF 806 itself. Applying an electric or electromagnetic field to the PUF 806 provides a further measurement parameter, which can introduce conformational changes, such as piezoelectric changes, to the PUF 806, changing the response of the PUF 806 to incident EM radiation. This further increases the flexibility in generating challenges.

Referring back to Figure 7, at item 704 of Figure 7, the first device sends a request to authenticate the second device using the challenge, for example via an authentication channel, such as the authentication channel 618 of Figure 6. In this case, the request is for a second response to the challenge obtained using the second PUF, which is associated with the second device. The request for example includes sufficient information about the challenge to allow a system for obtaining the second response to the challenge to be configured in accordance with the challenge. For example, the request may include at least one configuration parameter to configure the second PUF, a radiation source associated with the second PUF (such as a radiation source similar to the radiation source 818 of Figure 8), and/or a radiation detector associated with the second PUF (such as a radiation detector similar to the radiation detector 824 of Figure 8) in the particular configuration corresponding to the challenge. In this way, the first and second PUFs can be configured in the same configuration, and subjected to the same input, in order to present the same challenge to the first and second PUFs. The request may additionally or alternatively include a detection parameter to indicate a portion of the interference pattern obtained using the second PUF to use for obtaining the second response. For example, the detection parameter may indicate a set of detector elements of the radiation detector for which a measurement is to be obtained as part of the second response.

At item 706 of Figure 7, the system for obtaining the second response (which may be similar to the system 800 of Figure 8, but including the second PUF) is configured by the second device based on the request sent by the first device. In this case, the configuration of the system is performed by the device associated with the second PUF (the second device). For example, the second device may generate suitable control commands to instruct actuator(s) of the system to move respective components of the system to the particular configuration corresponding to the challenge, to instruct the radiation source to generate EM radiation with a particular feature and/or to control an electric or electromagnetic field generator to apply a particular electric or electromagnetic field to the second PUF. However, in other cases, the configuration of the system for obtaining the second response may be performed by a different system or component, e.g. based on an instruction sent from the second device in response to receipt of the request from the first device.

In the example of Figure 7, both the first and second PUFs were obtained from the same object and are substantially identical. Hence, applying the same challenge to both the first and second PUFs should obtain substantially the same result. To reduce the difference between responses obtained using the two PUFs, calibration measurements on the two PUFs may be performed before the PUFs are associated with the first and second devices, e.g. before the PUFs are sent to locations remote from each other. The calibration measurements for example involve illuminating both PUFs with EM radiation with the PUFs arranged in a plurality of different respective positions relative to the radiation source and/or radiation detector. The interference patterns obtained for each of the PUFs can be compared to each other to identify respective positions of the PUFs so that the interference patterns are the same or substantially the same as each other, which e.g. indicates that the structural feature of each of the PUFs is aligned with one another. In this way, a correction to be applied to the position of at least one of the PUF can be obtained, e.g. to translate a first position of the first PUF to a corresponding second position of the second PUF so as to obtain sufficiently corresponding interference patterns using the first and second PUFs. This may, for example, involve determining the index of rotation of a rotating platform to rotate the second PUF by an additional amount relative to the first PUF. The correction may be applied prior to performance of the challenge, or applying the challenge to one of the PUFs may involve correcting at least one parameter indicative of the challenge (such as a position of at least one component of the system 800) based on the calibration measurements.

At item 708 of Figure 7, the second response to the challenge is obtained using the second PUF. As explained with reference to Figure 8, this for example involves illuminating the second PUF with the EM radiation generated by the radiation source, and obtaining a measurement of the specular reflection (e.g. in the form of an interference pattern) with the second PUF at a given angle with respect to the radiation source, and returning the values measured at particular detector elements of the radiation detector. The values obtained by the radiation detector are then sent to the second device in this example, e.g. via a suitable wired or wireless connection.

At item 710 of Figure 7, the second device sends the second response to the challenge to the first device, for example via an authentication channel, such as the authentication channel 618 of Figure 6.

At item 712 of Figure 7, the first device compares the second response obtained using the second PUF with the first response obtained using the first PUF. In this way, it can be determined whether the second device is authenticated. In Figure 7, the comparison is performed by the first device itself, but in other case the comparison may be performed by a different component (such as a further computing system), that can communicate with the first device.

At item 714 of Figure 7, it is determined, based on the comparison performed at item 712, whether the first and second responses match within a statistical bound, such as whether the first and second responses differ by less than a predetermined amount. For example, where the first and second PUFs are substantially identical, it may be determined that the second device is authenticated if the second response is substantially identical to the first response. If the responses match within the statistical bound, authentication of the second device succeeds, at item 716 of Figure 7. Otherwise, if the difference between the two responses exceeds the statistical bound, authentication of the second device fails, at item 718 of Figure 7.

If the second device is successfully authenticated, the first device may communicate with the second device to indicate that authentication has been successful. The first and second devices may then subsequently send data to each other via a data channel, such as the data channel 620 of Figure 6.

It will be apparent that the method 700 of Figure 7 may be repeated with the roles of the first device and the second device reversed, i.e. with the second device requesting a response to a challenge from the first device, with the challenge selected by the second device. The method 700 of Figure 7 therefore provides for two-way authentication. Furthermore, with triplet or n-plet PUFs that are all obtained from the same object, the method 700 of Figure 7 can be used for multiparty authentication.

Figure 9 is a schematic diagram of another example system 900 for obtaining a response to a challenge using a PUF 906. Features of the system 900 of Figure 9 that are similar to corresponding features of the system 800 of Figure 8 are labelled with the same reference numeral but incremented by 100; corresponding descriptions are to be taken to apply.

In Figure 9, the PUF 906 is similar to one of the PUFs 406a, 406b of Figure 4 and includes a grain boundary 902. The PUF 906 illustrated in Figure 9 is shown in a side view, which corresponds to a plan view of one of the PUFs 406a, 406b of Figure 4. In other words, the first linear feature 402a shown in Figure 4 corresponds to the grain boundary 902 shown in Figure 9. In this example, rather than transmitting EM radiation through the PUF 906, the radiation source 918 of Figure 9 is arranged to illuminate a surface of the PUF 906 with EM radiation 920. The radiation detector 924 is configured to detect the EM radiation 922 reflected from the surface of the PUF 906. The EM radiation 920 may be reflected from the surface itself, or may penetrate at least partly through the PUF 906, and be reflected from an interior of the PUF 906, e.g. from a crystalline plane relatively close to the surface (such as within a few crystalline planes from the surface) in examples in which the PUF 906 comprises crystalline material. The surface illuminated by the EM radiation 920 in this case is an exposed surface 907 of the PUF 906, which is exposed when an object is divided to transect a structural feature of the object (the grain boundary 902 in this case), to form the PUF 906.

In the example system 900 of Figure 9, suitable parameters for use in defining a challenge include the lateral position of the PUF 906 relative to the radiation source 918 and/or the radiation detector 924, the wavelength of the EM radiation, the bandwidth of the EM radiation, and/or the angular position of the PUF 906 relative to the radiation source 918 and/or the radiation detector 924. However, the challenge may also include additional parameters or variables, such as an electric or electromagnetic field to be applied to the PUF 906.

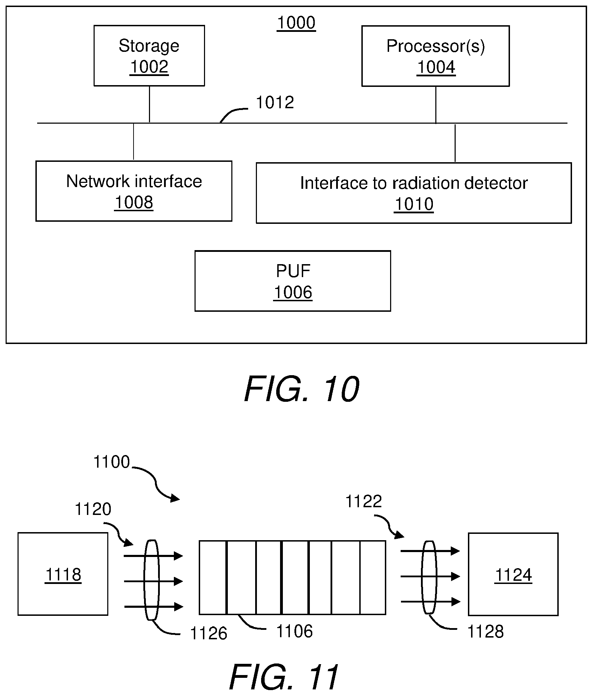

Figure 10 is a schematic diagram of internal components of a network element 1000 comprising a PUF 1006 that may be used in any of the methods of Figures 6 to 9. The network element 1000 may include additional components not shown in Figure 10; only those most relevant to the present disclosure are shown.

The network element 1000 includes storage 1002, which may for example store data indicative of a challenge and/or a response, such as at least one configuration parameter associated with a particular challenge. The network element 1000 also includes at least one processor 1004 which can for example be used to process a first and a second response to determine whether a second device is authenticated, e.g. as described with reference to Figure 7.

The network element 1000 further includes a network interface 1008, to communicate with a second network element, e.g. associated with a second PUF, to authenticate the second network element. For example, a second response obtained using the second PUF may be received by the network element 1000 from a remote device via with the network interface 1008. The network element 1000 includes an interface to a radiation detector 1010, to receive data from the radiation detector 1010 for use in obtaining a response to a challenge. In other cases, though, a network element otherwise similar to the network element 1000 of Figure 10 may not include an interface to a radiation detector, e.g. if the radiation detector forms part of the network element or if data obtained by the radiation detector is sent to the network element via another interface such as the network interface 1008. The network element 1000 may include at least one further interface (not shown in Figure 10) for connecting to at least one further component. The components of the network element 1000 are communicably coupled via a suitable bus 1012.

### Alternatives and Modifications

Further examples are envisaged. For example, in Figure 4, grain boundaries between neighbouring crystalline domains 414a-414f extend linearly along a first axis 404. It is to be appreciated that this is merely an example and, in other examples, grain boundaries need not correspond to linear features. In such cases, a grain boundary may nevertheless correspond to a structural feature of an object, which is transected to create two PUFs, which e.g. have corresponding surface patterns but which may have a different internal structure than each other.

As explained above, the method 100 of Figure 1 may be used to create a plurality of substantially identical PUFs. However, it is to be appreciated that the methods herein, including the method 100 of Figure 1, may be used to create a plurality of PUFs that are similar to each other but not identical. This may be the case where at least one linear feature generally extends along the first axis but with a non-negligible degree of deviation from a straight line along the first axis, or where the structural feature is a non-linear feature. In such cases, each of the PUFs may be atomically similar (at least in a surface region), and may produce a similar response (e.g. a similar interference pattern) when interrogated by radiation. In such cases, intensity points of the interference pattern as obtained using a pixelated detector, such as a camera, can be compared within a margin of error. An interference pattern may also or instead be decomposed, e.g. using singular value decomposition (SVD), for each of the PUFs, and compared to each other to identify whether the PUFs are substantially identical. Statistical methods can alternatively or additionally be applied. For example, a machine learning system such as a deep learning classifier (e.g., based on a neural network) can be trained using the PUFs created using the method 100 (and in some cases using other PUFs), to classify responses into those obtained using PUFs created using the method 100 (i.e. forming part of the same set of PUFs) and those obtained from other PUFs. For example, a second response obtained using a second PUF may be transformed, e.g. using a suitable transfer function, to compensate for a difference between a first PUF and the second PUF, thereby generating a transformed second response. For example, a trained machine learning system such as a neural network can be used to effectively apply the transfer function to the response obtained using the first PUF. In such cases, a second device associated with the second PUF may be considered to be authenticated where the transformed second response is substantially identical to the first response.

In Figures 6 to 9, a single PUF is associated with a respective device. However, in other examples, a first device (such as the first device 616a of Figure 6) is associated with a first plurality of PUFs comprising a first PUF and each of the first plurality of PUFs is used to obtain the first response to the challenge. For example, EM radiation may be transmitted through a combination of each of the first plurality of PUFs rather than just a single PUF, so that the obtained interference pattern depends on the juxtaposition of each of the first plurality of PUFs. In such cases, a second device (such as the second device 616b of Figure 6) is similarly associated with a second plurality of PUFs comprising the second PUF and each of the second plurality of PUFs is used to obtain the second response to the challenge. In these examples, each of the first plurality of PUFs corresponds to a different respective one of the second plurality of PUFs. Each of the first and second plurality of PUFs may be moveable, e.g. to slide and/or rotate each individual PUF relative to the other PUFs. In this example, the challenge for example indicates the respective position of each of the PUFs while the PUFs are illuminated in order to obtain an interference pattern. Hence, the request for the second response may include at least one configuration parameter indicating the respective position of each of the second plurality of PUFs relative to the radiation source during obtaining the second response to the challenge. This provides a further set of variable measurement parameters, further increasing the potential complexity of the challenge.

Systems otherwise similar to the systems 800, 900 of Figures 8 and 9 may include at least one lens. Such an example system 1100 is shown in Figure 11. Features of the system 1100 of Figure 11 that are similar to corresponding features of the system 800 of Figure 8 are labelled with the same reference but incremented by 300; corresponding descriptions are to be taken to apply.

The system 1100 of Figure 11 is for obtaining a response to a challenge using a PUF 1106. A radiation source 1118 is arranged to emit EM radiation 1120 for at least partial transmission through the PUF 1106. The EM radiation 11222 transmitted through the PUF 1106 is detected by a radiation detector 1124. An interference pattern detected by the radiation detector 1124 is used to generate a response to the challenge corresponding to the transmission of the EM radiation through the system 1100 with a particular configuration.

In the system 1100 of Figure 11, a lens 1126 is arranged between the radiation source 1118 and the PUF 1106. The lens 1126 may be a simple or compound lens, and is for example used to change the shape of the wavefront of the EM radiation 1120 generated by the radiation source 1118, to generate a more distinctive pattern as a response to a challenge. The system 1100 of Figure 11 also includes a further lens 1128 between the PUF 1106 and the radiation detector 1124. The further lens 1128 between the PUF 1106 and the radiation detector 1124 for example moves the interference pattern into the far-field domain, in which there is typically greater interaction between structural features that are widely separated within the PUF. This increases the complexity of the interference pattern generated.

In the example of Figure 11, the challenge may include the particular configuration of the lens 1126 and/or the further lens 1128, such as whether the lens 1126 and/or the further lens 1128 are present, a position of the lens 1126 and/or the further lens 1128, and/or a characteristic of the lens 1126 and/or the further lens 1126, such as the focal length. At least one configuration parameter indicating the configuration of the lens 1126 and/or the further lens 1128 may be included in a request for a response to a challenge sent to a remote PUF as described with reference to item 704 of Figure 7. In this way, a lens and/or a further lens of a remote system for use in obtaining a response to the challenge can be configured in accordance with the challenge.

It is to be appreciated that the lens 1126 and the further lens 1128 may be the same as or different from each other. In further examples, a system otherwise similar to the system 1100 of Figure 11 may lack the lens 1126 or the further lens 1128 and hence may include solely one of the lenses 1126, 1128, or may not include a lens (e.g. like the system 800 of Figure 8).

In examples herein, a challenge involves the illumination of a PUF with EM radiation. However, this is merely an example. In other cases, a challenge may involve interrogating a PUF in a different manner. Furthermore, in examples herein the response to a challenge is derived from an interference pattern. However, in other cases, the response may be derived from a different pattern obtained by physical interrogation of a PUF, such as a diffraction pattern.

Any reference numerals appearing in the claims are for illustration only and shall not limit the scope of the claims.

## Claims

1. An authentication method (700) using a plurality of physical uncloneable functions, `PUFs' (206a, 206b, 306a, 306b, 406a, 406b, 606a, 606b, 806, 906, 1006, 1106), the plurality of PUFs comprising a first physical unclonable function, 'PUF', (206a, 306a, 406a, 606a) associated with a first device (616a) and a second PUF (206b, 306b, 406b, 606b) associated with a second device (616b), a surface pattern of the first PUF corresponding to a surface pattern of the second PUF, the method comprising:
obtaining (702) a first response (822, 922, 1122) to a challenge (820, 920, 1120) using the first PUF;
sending (704), from the first device to the second device, a request for a second response to the challenge obtained using the second PUF;
receiving, at the first device, the second response; and
determining (714) whether the second device is authenticated based on a comparison (712) between the first response and the second response, wherein the surface patterns of the first and second PUFs are sufficiently similar to identify that the first and second PUFs have been obtained from the same object, based on that comparison.

2. The authentication method of claim 1, wherein obtaining the first response to the challenge using the first PUF comprises:
illuminating the first PUF using a radiation source (818, 918) to generate an interference pattern; and
detecting at least a portion of the interference pattern using a radiation detector (824, 924, 1124), the first response based on at least the portion of the interference pattern;
optionally wherein during obtaining the first response to the challenge using the first PUF, the first PUF, the radiation source and/or the radiation detector are configured in a particular configuration in accordance with the challenge, the particular configuration in that case optionally comprising at least one of: a particular position of the first PUF relative to the radiation source, a particular position of the radiation detector relative to the first PUF, a particular electromagnetic field to be applied to the first PUF, a particular voltage to be applied to the first PUF, a particular configuration of a lens (1126) between the radiation source and the first PUF, and/or a particular configuration of a lens (1128) between the first PUF and the radiation detector;
optionally wherein the request for the second response to the challenge comprises at least one configuration parameter to configure the second PUF, a radiation source associated with the second PUF, a radiation detector associated with the second PUF, a lens between the second PUF and the radiation source associated with the second PUF, and/or a lens between the second PUF and the radiation detector associated with the second PUF in the particular configuration during obtaining the second response to the challenge; optionally wherein:
the first device is associated with a first plurality of PUFs comprising the first PUF and each of the first plurality of PUFs is used to obtain the first response to the challenge;
the second device is associated with a second plurality of PUFs comprising the second PUF and each of the second plurality of PUFs is used to obtain the second response to the challenge, each of the first plurality of PUFs corresponding to a different respective one of the second plurality of PUFs; and
the at least one configuration parameter indicates the respective position of each of the second plurality of PUFs relative to the radiation source during obtaining the second response to the challenge;
optionally wherein the first response is obtained using a first portion of the interference pattern, without using a second portion of the interference pattern, and the request for the second response to the challenge comprises a detection parameter to indicate a corresponding first portion of an interference pattern associated with the second PUF for use in obtaining the second response.

3. The authentication method of either of claims 1 or 2,
wherein the first PUF is substantially identical to the second PUF, and determining whether the second device is authenticated comprises determining (716) that the second device is authenticated in response to the second response being substantially identical to the first response; or
wherein the authentication method comprises transforming the second response to compensate for a difference between the first PUF and the second PUF, thereby generating a transformed second response, wherein determining whether the second device is authenticated comprises determining that the second device is authenticated in response to the transformed second response being substantially identical to the first response.

4. The authentication method of any one of claims 1 to 3, wherein the first and second PUFs are manufactured using a method (100) comprising:
obtaining (102) an object (200, 300, 400) comprising a structural feature (202, 402, 902); and
dividing (104) the object to transect the structural feature, thereby forming the first PUF and the second PUF, each comprising a respective portion of the structural feature.

5. A first device (616a) for use in authenticating a second device (616b) in a system (600) comprising the first and second devices, the first device associated with a first physical unclonable function, `PUF', (206a, 306a, 406a, 606a) and the second device associated with a second PUF (206b, 306b, 406b, 606b), a surface pattern of the first PUF corresponding to a surface pattern of the second PUF, the first device configured to:
obtain (702) a first response (822, 922, 1122) to a challenge (820, 920, 1120) using the first PUF;
send (704) a request for a second response to the challenge obtained using the second PUF;
receive the second response; and
determine (714) whether the second device is authenticated based on a comparison (712) between the first response and the second response, wherein the surface patterns of the first and second PUFs are sufficiently similar to identify that the first and second PUFs have been obtained from the same object, based on that comparison;
optionally wherein the first device is a first network element (1000), and the second device is a second network element remote from the first network element.

6. The first device according to claim 5, wherein:
the first PUF is substantially identical to the second PUF, and to determine whether the second device is authenticated comprises determining (716) that the second device is authenticated in response to the second response being substantially identical to the first response; or
the first device is configured to transform the second response to compensate for a difference between the first PUF and the second PUF, thereby generating a transformed second response, and to determine whether the second device is authenticated comprises determining that the second device is authenticated in response to the transformed second response being substantially identical to the first response.

7. The authentication method or first device of any preceding claim, wherein the surface patterns of the first and second PUFs are sufficiently similar to identify that the first and second PUFs have been obtained from the same object, based on the first and second responses.

8. The authentication method of any of claims 1 to 4 or 7 or the first device of any of claims 5 to 7, wherein the challenge involves the illumination of the first PUF with electromagnetic, 'EM', radiation.

9. A method (100) of manufacturing a plurality of physical unclonable functions, 'PUFs', the method comprising:
obtaining (102) an object (200, 300, 400) comprising a structural feature (202, 402, 902); and
dividing (104) the object to transect the structural feature, thereby forming two PUFs (206a, 206b, 306a, 306b, 406a, 406b), each corresponding to a respective one of the plurality of PUFs and comprising a respective portion of the structural feature;
optionally wherein the structural feature comprises at least one linear feature (202, 402, 902) which extends along a first axis (204, 304, 404), dividing the object comprises dividing the object along at least one further axis (208, 210, 308, 310, 408, 410) substantially perpendicular to the first axis, and each of the two PUFs comprises a respective portion of the at least one linear feature;
optionally wherein the object comprises a crystalline material and the structural feature comprises at least one of: a linear defect of the crystalline material, an interface between at least two crystalline domains of the crystalline material, or an interface between the crystalline material and a further piece of crystalline material;
optionally wherein the object comprises at least one of: a photonic-crystalline material, a compound of multiple photonic crystals, or a birefringent material; wherein each of the plurality of PUFs is substantially identical to each other.

10. The method of claim 9, comprising:
providing (502) an array of particles;
deforming (504) the array of particles to obtain a deformed array of particles; and
hardening (506) the deformed array of particles to obtain a hardened array of particles, the object comprising the hardened array of particles, wherein optionally providing the array of particles comprises providing the array of particles in a container, and deforming the array of particles comprises deforming the container to deform the array of particles;
optionally wherein the array of particles is a first array of particles, the deformed array of particles is a first deformed array of particles, the hardened array of particles is a first hardened array of particles, and the method comprises:
providing a second array of particles;
deforming the second array of particles to obtain a second deformed array of particles;
hardening the second deformed array of particles to obtain a second hardened array of particles; and
during hardening of the first and second deformed array of particles, bringing the first deformed array of particles into contact with the second deformed array of particles, the object comprising the first hardened array of particles and the second hardened array of particles.

11. The method of either of claims 9 or 10, wherein obtaining the object comprises:
providing a material for forming the object; and
creating, in the material, at least one hole (202) which extends in a direction (204) substantially perpendicular to a direction (208, 210) along which the object is divided.

12. The method of any one of claims 9 to 11, wherein obtaining the object comprises providing a stack of layers (A, B, C, D, E, F, G) of material, respective interfaces between neighbouring layers of the stack extending along the first axis, wherein optionally the stack comprises a first layer with a first dielectric constant and a second layer with a second dielectric constant different from the first dielectric constant.

13. A physical unclonable function, 'PUF', (206a, 206b, 306a, 306b, 406a, 406b, 606a, 606b, 806, 906, 1006, 1106) manufactured according to the method of any one of claims 9 to 12.

14. A network element (1000) comprising the PUF of claim 13.

15. A system (600) comprising a first device (616a) associated with a first PUF (606a) and a second device (616b) associated with a second PUF (606b), wherein the first and second PUFs are manufactured according to the method of any one of claims 9 to 12.

## Patentansprüche

1. Authentifizierungsverfahren (700) unter Verwendung einer Vielzahl von physikalischen unklonierbaren Funktionen, 'PUFs' (206a, 206b, 306a, 306b, 406a, 406b, 606a, 606b, 806, 906, 1006, 1106), wobei die Vielzahl von PUFs eine erste physikalische unklonierbare Funktion, 'PUF' (206a, 306a, 406a, 606a), die einer ersten Vorrichtung (616a) zugeordnet ist, und eine zweite PUF (206b, 306b, 406b, 606b) umfasst, die einer zweiten Vorrichtung (616b) zugeordnet ist, wobei eine Oberflächenstruktur der ersten PUF einer Oberflächenstruktur der zweiten PUF entspricht, das Verfahren Folgendes umfassend:
Erlangen (702) einer ersten Antwort (822, 922, 1122) auf eine Abfrage (820, 920, 1120) unter Verwendung der ersten PUF;
Senden (704), von der ersten Vorrichtung an die zweite Vorrichtung, einer Aufforderung zu einer zweiten Antwort auf die Abfrage, die unter Verwendung der zweiten PUF erlangt wurde;
Empfangen, an der ersten Vorrichtung, der zweiten Antwort; und
Bestimmen (714), ob die zweite Vorrichtung auf der Grundlage eines Vergleichs (712) zwischen der ersten Antwort und der zweiten Antwort authentifiziert ist, wobei die Oberflächenstrukturen der ersten und der zweiten PUF auf der Grundlage dieses Vergleichs ausreichend ähnlich sind, um zu identifizieren, dass die erste und die zweite PUF von dem gleichen Objekt erlangt wurden.

2. Authentifizierungsverfahren nach Anspruch 1, wobei Erlangen der ersten Antwort auf die Abfrage unter Verwendung der ersten PUF Folgendes umfasst:
Beleuchten der ersten PUF unter Verwendung einer Strahlungsquelle (818, 918), um ein Interferenzmuster zu erzeugen; und
Detektieren mindestens eines Abschnitts des Interferenzmusters unter Verwendung eines Strahlungsdetektors (824, 924, 1124), wobei die erste Antwort auf mindestens dem Abschnitt des Interferenzmusters basiert;
wobei gegebenenfalls beim Erlangen der ersten Antwort auf die Abfrage unter Verwendung der ersten PUF die erste PUF, die Strahlungsquelle und/oder der Strahlungsdetektor in einer bestimmten Konfiguration gemäß der Abfrage eingerichtet sind, wobei die bestimmte Konfiguration in diesem Fall gegebenenfalls mindestens eines der Folgenden umfasst: eine bestimmte Position der ersten PUF relativ zu der Strahlungsquelle, eine bestimmte Position des Strahlungsdetektors relativ zu der ersten PUF, ein bestimmtes elektromagnetisches Feld, das auf die erste PUF angewendet werden soll, eine bestimmte Spannung, die an die erste PUF angelegt werden soll, eine bestimmte Konfiguration einer Linse (1126) zwischen der Strahlungsquelle und der ersten PUF und/oder eine bestimmte Konfiguration einer Linse (1128) zwischen der ersten PUF und dem Strahlungsdetektor;
wobei gegebenenfalls die Aufforderung zur zweiten Antwort auf die Abfrage mindestens einen Konfigurationsparameter zum Konfigurieren der zweiten PUF, eine Strahlungsquelle, die der zweiten PUF zugeordnet ist, einen Strahlungsdetektor, welcher der zweiten PUF zugeordnet ist, eine Linse zwischen der zweiten PUF und der Strahlungsquelle, die der zweiten PUF zugeordnet ist, und/oder eine Linse zwischen der zweiten PUF und dem Strahlungsdetektor, welcher der zweiten PUF zugeordnet ist, in der bestimmten Konfiguration beim Erlangen der zweiten Antwort auf die Abfrage umfasst; wobei gegebenenfalls:
die erste Vorrichtung einer ersten Vielzahl von PUFs zugeordnet ist, welche die erste PUF umfasst, und jede der ersten Vielzahl von PUFs verwendet wird, um die erste Antwort auf die Abfrage zu erhalten;
die zweite Vorrichtung einer zweiten Vielzahl von PUFs zugeordnet ist, welche die zweite PUF umfasst, und jede der zweiten Vielzahl von PUFs verwendet wird, um die zweite Antwort auf die Abfrage zu erhalten, wobei jede der ersten Vielzahl von PUFs einer jeweiligen anderen der zweiten Vielzahl von PUFs entspricht; und
der mindestens eine Konfigurationsparameter die jeweilige Position jeder der zweiten Vielzahl von PUFs relativ zu der Strahlungsquelle beim Erlangen der zweiten Antwort auf die Abfrage angibt;
wobei gegebenenfalls die erste Antwort unter Verwendung eines ersten Abschnitts des Interferenzmusters erhalten wird, ohne einen zweiten Abschnitt des Interferenzmusters zu verwenden, und die Aufforderung zur zweiten Antwort auf die Abfrage einen Detektionsparameter umfasst, um einen entsprechenden ersten Abschnitt eines Interferenzmusters, das der zweiten PUF zugeordnet ist, zur Verwendung beim Erlangen der zweiten Antwort anzugeben.

3. Authentifizierungsverfahren nach einem der Ansprüche 1 oder 2,
wobei die erste PUF im Wesentlichen mit der zweiten PUF identisch ist und Bestimmen, ob die zweite Vorrichtung authentifiziert ist, Bestimmen (716) umfasst, dass die zweite Vorrichtung als Reaktion darauf authentifiziert ist, dass die zweite Antwort im Wesentlichen mit der ersten Antwort identisch ist; oder
wobei das Authentifizierungsverfahren Transformieren der zweiten Antwort umfasst, um eine Differenz zwischen der ersten PUF und der zweiten PUF zu kompensieren, wodurch eine transformierte zweite Antwort erzeugt wird, wobei Bestimmen, ob die zweite Vorrichtung authentifiziert ist, Bestimmen umfasst, dass die zweite Vorrichtung als Reaktion darauf authentifiziert ist, dass die transformierte zweite Antwort im Wesentlichen mit der ersten Antwort identisch ist.

4. Authentifizierungsverfahren nach einem der Ansprüche 1 bis 3, wobei die erste und die zweite PUF unter Verwendung eines Verfahrens (100) hergestellt werden, das Folgendes umfasst:
Erlangen (102) eines Objekts (200, 300, 400), das ein strukturelles Merkmal (202, 402, 902) umfasst; und
Aufteilen (104) des Objekts, um das strukturelle Merkmal zu transektieren, wodurch die erste PUF und die zweite PUF ausgebildet werden, die jeweils einen jeweiligen Abschnitt des strukturellen Merkmals umfassen.

5. Erste Vorrichtung (616a) zur Verwendung beim Authentifizieren einer zweiten Vorrichtung (616b) in einem System (600), das die erste und die zweite Vorrichtung umfasst, wobei die erste Vorrichtung einer ersten physikalischen unklonierbaren Funktion, 'PUF', (206a, 306a, 406a, 606a) zugeordnet ist und die zweite Vorrichtung einer zweiten PUF (206b, 306b, 406b, 606b) zugeordnet ist, wobei eine Oberflächenstruktur der ersten PUF einer Oberflächenstruktur der zweiten PUF entspricht, wobei die erste Vorrichtung eingerichtet ist, um:
eine erste Antwort (822, 922, 1122) auf eine Abfrage (820, 920, 1120) unter Verwendung der ersten PUF zu erlangen (702);
eine Aufforderung zu einer zweiten Antwort auf die Abfrage zu senden (704), die unter Verwendung der zweiten PUF erlangt wurde;
die zweite Antwort zu empfangen; und
zu bestimmen (714), ob die zweite Vorrichtung auf der Grundlage eines Vergleichs (712) zwischen der ersten Antwort und der zweiten Antwort authentifiziert ist, wobei die Oberflächenstrukturen der ersten und der zweiten PUF auf der Grundlage dieses Vergleichs ausreichend ähnlich sind, um zu identifizieren, dass die erste und die zweite PUF von dem gleichen Objekt erlangt wurden;
wobei gegebenenfalls die erste Vorrichtung ein erstes Netzwerkelement (1000) ist und die zweite Vorrichtung ein zweites Netzwerkelement ist, das von dem ersten Netzwerkelement entfernt ist.

6. Erste Vorrichtung nach Anspruch 5, wobei:
die erste PUF im Wesentlichen mit der zweiten PUF identisch ist und bestimmen soll, ob die zweite Vorrichtung authentifiziert ist, Bestimmen (716) umfasst, dass die zweite Vorrichtung als Reaktion darauf authentifiziert ist, dass die zweite Antwort im Wesentlichen mit der ersten Antwort identisch ist; oder die erste Vorrichtung eingerichtet ist, um die zweite Antwort zu transformieren, um eine Differenz zwischen der ersten PUF und der zweiten PUF zu kompensieren, wodurch eine transformierte zweite Antwort erzeugt wird, und zu bestimmen, ob die zweite Vorrichtung authentifiziert ist, Bestimmen umfasst, dass die zweite Vorrichtung als Reaktion darauf authentifiziert ist, dass die transformierte zweite Antwort im Wesentlichen mit der ersten Antwort identisch ist.

7. Authentifizierungsverfahren oder erste Vorrichtung nach einem der vorhergehenden Ansprüche, wobei die Oberflächenstrukturen der ersten und der zweiten PUF ausreichend ähnlich sind, um auf Grundlage der ersten und der zweiten Antwort zu identifizieren, dass die erste und die zweite PUF von dem gleichen Objekt erlangt wurden.

8. Authentifizierungsverfahren nach einem der Ansprüche 1 bis 4 oder 7 oder erste Vorrichtung nach einem der Ansprüche 5 bis 7, wobei die Abfrage das Beleuchten der ersten PUF mit elektromagnetischer Strahlung, ,EM-Strahlung', einbezieht.

9. Verfahren (100) zum Herstellen einer Vielzahl von physikalischen unklonierbaren Funktionen, 'PUFs', das Verfahren Folgendes umfassend:
Erlangen (102) eines Objekts (200, 300, 400), das ein strukturelles Merkmal (202, 402, 902) umfasst; und Aufteilen (104) des Objekts, um das strukturelle Merkmal zu transektieren, wodurch zwei PUF (206a, 206b, 306a, 306b, 406a, 406b) ausgebildet werden, die jeweils einer jeweiligen der Vielzahl von PUFs entsprechen und einen jeweiligen Abschnitt des strukturellen Merkmals umfassen;
wobei das strukturelle Merkmal gegebenenfalls mindestens ein lineares Merkmal (202, 402, 902) umfasst, das sich entlang einer ersten Achse (204, 304, 404) erstreckt, Aufteilen des Objekts Aufteilen des Objekts entlang mindestens einer weiteren Achse (208, 210, 308, 310, 408, 410) umfasst, die im Wesentlichen senkrecht zu der ersten Achse ist, und jede der beiden PUFs einen jeweiligen Abschnitt des mindestens einen linearen Merkmals umfasst; wobei das Objekt gegebenenfalls ein kristallines Material umfasst und das strukturelle Merkmal mindestens eines von Folgenden umfasst: einen linearen Defekt des kristallinen Materials, eine Grenzfläche zwischen mindestens zwei kristallinen Domänen des kristallinen Materials oder eine Grenzfläche zwischen dem kristallinen Material und einem weiteren Stück kristallinen Materials;
wobei das Objekt gegebenenfalls mindestens eines des Folgenden umfasst: ein photonisch-kristallines Material, eine Verbindung mehrerer photonischer Kristalle oder ein doppelbrechendes Material;
wobei jede der mehreren PUFs im Wesentlichen identisch zueinander ist.

10. Verfahren nach Anspruch 9, Folgendes umfassend:
Bereitstellen (502) einer Partikelmatrix;
Deformieren (504) der Partikelmatrix, um eine deformierte Partikelmatrix zu erlangen; und
Härten (506) der deformierten Partikelmatrix, um eine gehärtete Partikelmatrix zu erlangen, wobei das Objekt die gehärtete Partikelmatrix umfasst, wobei gegebenenfalls Bereitstellen der Partikelmatrix Bereitstellen der Partikelmatrix in einem Behälter umfasst, und Deformieren der Partikelmatrix Deformieren des Behälters umfasst, um die Partikelmatrix zu deformieren;
wobei die Partikelmatrix gegebenenfalls eine erste Partikelmatrix ist, die deformierte Partikelmatrix eine erste deformierte Partikelmatrix ist, die gehärtete Partikelmatrix eine erste gehärtete Partikelmatrix ist und das Verfahren Folgendes umfasst:
Bereitstellen einer zweiten Partikelmatrix;
Deformieren der zweiten Partikelmatrix, um eine zweite deformierte Partikelmatrix zu erlangen;
Härten der zweiten deformierten Partikelmatrix, um eine zweite gehärtete Partikelmatrix zu erlangen; und
Inkontaktbringen der ersten deformierten Partikelmatrix mit der zweiten deformierten Partikelmatrix beim Härten der ersten und der zweiten deformierten Partikelmatrix, wobei das Objekt die erste gehärtete Partikelmatrix und die zweite gehärtete Partikelmatrix umfasst.

11. Verfahren nach einem der Ansprüche 9 oder 10, wobei Erlangen des Objekts Folgendes umfasst:
Bereitstellen eines Materials zum Ausbilden des Objekts; und
Erzeugen mindestens eines Lochs (202) in dem Material, das sich in eine Richtung (204) erstreckt, die im Wesentlichen senkrecht zu einer Richtung (208, 210) ist, entlang der das Objekt aufgeteilt ist.

12. Verfahren nach einem der Ansprüche 9 bis 11, wobei das Erlangen des Objekts Bereitstellen eines Materialschichtenstapels (A, B, C, D, E, F, G) umfasst, wobei sich jeweilige Grenzflächen zwischen benachbarten Schichten des Stapels entlang der ersten Achse erstrecken, wobei der Stapel gegebenenfalls eine erste Schicht mit einer ersten Dielektrizitätskonstante und eine zweite Schicht mit einer zweiten Dielektrizitätskonstante umfasst, die sich von der ersten Dielektrizitätskonstante unterscheidet.

13. Physikalische unklonierbare Funktion, 'PUF' (206a, 206b, 306a, 306b, 406a, 406b, 606a, 606b, 806, 906, 1006, 1106), die gemäß dem Verfahren nach einem der Ansprüche 9 bis 12 hergestellt wird.

14. Netzwerkelement (1000), das die PUF nach Anspruch 13 umfasst.

15. System (600), umfassend eine erste Vorrichtung (616a), die einer ersten PUF (606a) zugeordnet ist, und eine zweite Vorrichtung (616b), die einer zweiten PUF (606b) zugeordnet ist, wobei die erste und die zweite PUF gemäß dem Verfahren nach einem der Ansprüche 9 bis 12 hergestellt werden.

## Revendications

1. Procédé d'authentification (700) utilisant une pluralité de fonctions physiques non clonables, 'PUF' (206a, 206b, 306a, 306b, 406a, 406b, 606a, 606b, 806, 906, 1006, 1106), la pluralité de PUF comprenant une première fonction physique non clonable, 'PUF' (206a, 306a, 406a, 606a) associée à un premier dispositif (616a) et une deuxième PUF (206b, 306b, 406b, 606b) associée à un deuxième dispositif (616b), un motif de surface de la première PUF correspondant à un motif de surface de la deuxième PUF, le procédé comprenant :
l'obtention (702) d'une première réponse (822, 922, 1122) à une épreuve (820, 920, 1120) au moyen de la première PUF ;
l'envoi (704), du premier dispositif au deuxième dispositif, d'une requête pour une deuxième réponse à l'épreuve obtenue au moyen de la deuxième PUF ;
la réception, au niveau du premier dispositif, de la deuxième réponse ; et
la détermination (714) que le deuxième dispositif est authentifié ou non sur la base d'une comparaison (712) entre la première réponse et la deuxième réponse, dans lequel les motifs de surface des première et deuxième PUF sont suffisamment similaires pour identifier que les première et deuxième PUF ont été obtenues à partir du même objet, sur la base de cette comparaison.

2. Procédé d'authentification selon la revendication 1, dans lequel l'obtention de la première réponse à l'épreuve au moyen de la première PUF comprend :
l'éclairage de la première PUF au moyen d'une source de rayonnement (818, 918) pour générer un motif d'interférence ; et
la détection d'au moins une partie du motif d'interférence au moyen d'un détecteur de rayonnement (824, 924, 1124), la première réponse étant basée au moins sur la partie du motif d'interférence ;
éventuellement dans lequel, pendant l'obtention de la première réponse à l'épreuve au moyen de la première PUF, la première PUF, la source de rayonnement et/ou le détecteur de rayonnement sont configurés dans une configuration particulière en fonction de l'épreuve, la configuration particulière dans ce cas comprenant éventuellement au moins un élément parmi : une position particulière de la première PUF par rapport à la source de rayonnement, une position particulière du détecteur de rayonnement par rapport à la première PUF, un champ électromagnétique particulier à appliquer à la première PUF, une tension particulière à appliquer à la première PUF, une configuration particulière d'une lentille (1126) entre la source de rayonnement et la première PUF, et/ou une configuration particulière d'une lentille (1128) entre la première PUF et le détecteur de rayonnement ; éventuellement dans lequel la requête pour la deuxième réponse à l'épreuve comprend au moins un paramètre de configuration pour configurer la deuxième PUF, une source de rayonnement associée à la deuxième PUF, un détecteur de rayonnement associé à la deuxième PUF, une lentille entre la deuxième PUF et la source de rayonnement associée à la deuxième PUF et/ou une lentille entre la deuxième PUF et le détecteur de rayonnement associé à la deuxième PUF dans la configuration particulière pendant l'obtention de la deuxième réponse à l'épreuve ; éventuellement dans lequel :
le premier dispositif est associé à une première pluralité de PUF comprenant la première PUF et chaque PUF de la première pluralité de PUF est utilisée pour obtenir la première réponse à l'épreuve ;
le deuxième dispositif est associé à une deuxième pluralité de PUF comprenant la deuxième PUF et chaque PUF de la deuxième pluralité de PUF est utilisée pour obtenir la deuxième réponse à l'épreuve, chaque PUF de la première pluralité de PUF correspondant à une PUF respective différente de la deuxième pluralité de PUF ; et
l'au moins un paramètre de configuration indique la position respective de chaque PUF de la deuxième pluralité de PUF par rapport à la source de rayonnement pendant l'obtention de la deuxième réponse à l'épreuve ; éventuellement dans lequel la première réponse est obtenue au moyen d'une première partie du motif d'interférence, sans utiliser une deuxième partie du motif d'interférence, et la requête pour la deuxième réponse à l'épreuve comprend un paramètre de détection pour indiquer une première partie correspondante d'un motif d'interférence associé à la deuxième PUF à utiliser dans l'obtention de la deuxième réponse.

3. Procédé d'authentification selon l'une ou l'autre des revendications 1 et 2,
dans lequel la première PUF est sensiblement identique à la deuxième PUF, et la détermination que le deuxième dispositif est authentifié ou non comprend la détermination (716) que le deuxième dispositif est authentifié en réponse au fait que la deuxième réponse est sensiblement identique à la première réponse ; ou
le procédé d'authentification comprenant la transformation de la deuxième réponse pour compenser une différence entre la première PUF et la deuxième PUF, ce qui génère ainsi une deuxième réponse transformée, dans lequel la détermination que le deuxième dispositif est authentifié ou non comprend la détermination que le deuxième dispositif est authentifié en réponse au fait que la deuxième réponse transformée est sensiblement identique à la première réponse.

4. Procédé d'authentification selon l'une quelconque des revendications 1 à 3, dans lequel les première et deuxième PUF sont fabriquées au moyen d'un procédé (100) comprenant :
l'obtention (102) d'un objet (200, 300, 400) comprenant une caractéristique structurale (202, 402, 902) ; et
la division (104) de l'objet pour couper transversalement la caractéristique structurale, ce qui forme ainsi la première PUF et la deuxième PUF, chacune comprenant une partie respective de la caractéristique structurale.

5. Premier dispositif (616a) à utiliser dans l'authentification d'un deuxième dispositif (616b) dans un système (600) comprenant les premier et deuxième dispositifs, le premier dispositif étant associé à une première fonction physique non clonable, 'PUF' (206a, 306a, 406a, 606a) et le deuxième dispositif étant associé à une deuxième PUF (206b, 306b, 406b, 606b), un motif de surface de la première PUF correspondant à un motif de surface de la deuxième PUF, le premier dispositif étant conçu pour :
obtenir (702) une première réponse (822, 922, 1122) à une épreuve (820, 920, 1120) au moyen de la première PUF ; envoyer (704) une requête pour une deuxième réponse à l'épreuve obtenue au moyen de la deuxième PUF ;
recevoir la deuxième réponse ; et
déterminer (714) si le deuxième dispositif est authentifié en se basant sur une comparaison (712) entre la première réponse et la deuxième réponse, dans lequel les motifs de surface des première et deuxième PUF sont suffisamment similaires pour identifier que les première et deuxième PUF ont été obtenues à partir du même objet, sur la base de cette comparaison ;
éventuellement dans lequel le premier dispositif est un premier élément de réseau (1000), et le deuxième dispositif est un deuxième élément de réseau distant du premier élément de réseau.

6. Premier dispositif selon la revendication 5, dans lequel :
la première PUF est sensiblement identique à la deuxième PUF, et la détermination que le deuxième dispositif est authentifié ou non comprend la détermination (716) que le deuxième dispositif est authentifié en réponse au fait que la deuxième réponse est sensiblement identique à la première réponse ; ou
le premier dispositif est conçu pour transformer la deuxième réponse pour compenser une différence entre la première PUF et la deuxième PUF, ce qui génère ainsi une deuxième réponse transformée, et la détermination que le deuxième dispositif est authentifié ou non comprend la détermination que le deuxième dispositif est authentifié en réponse au fait que la deuxième réponse transformée est sensiblement identique à la première réponse.

7. Procédé d'authentification ou premier dispositif selon une quelconque revendication précédente, dans lesquels les motifs de surface des première et deuxième PUF sont suffisamment similaires pour identifier que les première et deuxième PUF ont été obtenues à partir du même objet, sur la base des première et deuxième réponses.

8. Procédé d'authentification selon l'une quelconque des revendications 1 à 4 et 7 ou premier dispositif selon l'une quelconque des revendications 5 à 7, dans lesquels l'épreuve implique l'éclairage de la première PUF avec un rayonnement électromagnétique, 'EM'.

9. Procédé (100) de fabrication d'une pluralité de fonctions physiques non clonables, 'PUF', le procédé comprenant :
l'obtention (102) d'un objet (200, 300, 400) comprenant une caractéristique structurale (202, 402, 902) ; et
la division (104) de l'objet pour couper transversalement la caractéristique structurale, ce qui forme ainsi deux PUF (206a, 206b, 306a, 306b, 406a, 406b), chacune correspondant à une PUF respective de la pluralité de PUF et comprenant une partie respective de la caractéristique structurale ;
éventuellement dans lequel la caractéristique structurale comprend au moins une caractéristique linéaire (202, 402, 902) qui s'étend le long d'un premier axe (204, 304, 404), la division de l'objet comprend la division de l'objet le long d'au moins un autre axe (208, 210, 308, 310, 408, 410) sensiblement perpendiculaire au premier axe, et chacune des deux PUF comprend une partie respective de l'au moins une caractéristique linéaire ; éventuellement dans lequel l'objet comprend un matériau cristallin et la caractéristique structurale comprend au moins un élément parmi : un défaut linéaire du matériau cristallin, une interface entre au moins deux domaines cristallins du matériau cristallin, et une interface entre le matériau cristallin et un autre morceau de matériau cristallin ;
éventuellement dans lequel l'objet comprend au moins un élément parmi : un matériau cristallin photonique, un composé de multiples cristaux photoniques, et un matériau biréfringent ;
dans lequel chaque PUF de la pluralité de PUF est sensiblement identique aux autres.

10. Procédé selon la revendication 9, comprenant :
l'obtention (502) d'un réseau de particules ;
la déformation (504) du réseau de particules pour obtenir un réseau déformé de particules ; et
le durcissement (506) du réseau déformé de particules pour obtenir un réseau durci de particules, l'objet comprenant le réseau durci de particules, éventuellement dans lequel l'obtention du réseau de particules comprend l'obtention du réseau de particules dans un récipient, et la déformation du réseau de particules comprend la déformation du récipient pour déformer le réseau de particules ;
éventuellement dans lequel le réseau de particules est un premier réseau de particules, le réseau déformé de particules est un premier réseau déformé de particules, le réseau durci de particules est un premier réseau durci de particules, et le procédé comprend :
l'obtention d'un deuxième réseau de particules ;
la déformation du deuxième réseau de particules pour obtenir un deuxième réseau déformé de particules ;
le durcissement du deuxième réseau de particules pour obtenir un deuxième réseau durci de particules ; et pendant le durcissement du premier et du deuxième réseau déformé de particules, la mise en contact du premier réseau déformé de particules et du deuxième réseau déformé de particules, l'objet comprenant le premier réseau durci de particules et le deuxième réseau durci de particules.

11. Procédé selon l'une ou l'autre des revendications 9 et 10, dans lequel l'obtention de l'objet comprend : l'obtention d'un matériau destiné à former l'objet ; et la création, dans le matériau, d'au moins un trou (202) qui s'étend dans une direction (204) sensiblement perpendiculaire à une direction (208, 210) le long de laquelle l'objet est divisé.

12. Procédé selon l'une quelconque des revendications 9 à 11, dans lequel l'obtention de l'objet comprend l'obtention d'un empilement de couches (A, B, C, D, E, F, G) de matériau, des interfaces respectives entre couches voisines de l'empilement s'étendant le long du premier axe, éventuellement dans lequel l'empilement comprend une première couche avec une première constante diélectrique et une deuxième couche avec une deuxième constante diélectrique différente de la première constante diélectrique.

13. Fonction physique non clonable, 'PUF' (206a, 206b, 306a, 306b, 406a, 406b, 606a, 606b, 806, 906, 1006, 1106) fabriquée selon le procédé de l'une quelconque des revendications 9 à 12.

14. Élément de réseau (1000) comprenant la PUF de la revendication 13.

15. Système (600) comprenant un premier dispositif (616a) associé à une première PUF (606a) et un deuxième dispositif (616b) associé à une deuxième PUF (606b), dans lequel les première et deuxième PUF sont fabriquées selon le procédé de l'une quelconque des revendications 9 à 12.
